# EUROPEAN PATENT SPECIFICATION

(11) **EP 0 846 435 B1**
(45) Date of publication and mention of the grant of the patent: **11.08.1999**
(21) Application number: 96830635.7
(22) Date of filing: 18.12.1996
(51) Int. Cl.: A47J 27/00

(54) **A cooking pot for food**
yin Kochgeschirr für Nahrungsmittel
Un récipient de cuisson pour nourriture

(30) Priority: 06.12.1996 EP 96830613
(43) Date of publication of application: 10.06.1998
(73) Proprietor: SILGA S.p.A., 20090 Buccinasco (Milano) (IT)
(72) Inventor: Garavaglia, Fulvio Luigi, 20144 Milano (IT)
(74) Representative: Righetti, Giuseppe

(56) References cited:
- EP-A- 0 172 702
- EP-A- 0 222 699
- WO-A-88/03379
- DE-A- 3 820 310

## Description

The prevent invention relates to a saucepan or pot for cooking food.

It is known that pots used for cooking food have undergone plenty of modifications over time tending to improve the energetic efficiency of same and reach uniformity in cooking.

In particular, pots consisting of a mere steel container have been gradually replaced by pots provided with a capsule-like bottom. More specifically; said pots consist of a holding body usually made of a stainless steel material, a layer of a highly heat-conductive material, generally aluminium, being associated with the base wall of said body, said layer being in turn coupled to a protective steel cover. In this way the highly heat-conductive material layer is encapsulated between said base wall and cover layer.

Steel pots provided with a capsule like bottom have advantageously enabled achievement of good results in terms of efficiency in transmitting heat from the heating surface to the pot bottom and reaching an even heat spreading at the base wall of the holding body containing the food to be cooked.

In spite of the technical solutions briefly described above, it is to point out that pots presently available on the market are not yet capable of inhibiting heat loss in an efficient manner, in particular at the side wall of the pot itself that, due to its surface extension, undoubtedly represents an area of high heat loss.

For the above reason, presently available pots have a restricted thermal efficiency in that most of the heat sent to them is irreparably lost.

In addition, when foods are submitted to cooking it is always under a condition of decreasing temperature away from the bottom wall, which therefore will bring about a clear unevenness in treatment.

Referring particularly to pots provided with a capsule-like bottom, it is also to point out that, since an outer protective cover of stainless steel material (preventing corrosion and other similar phenomena) needs to be associated with the aluminium layer, a well apparent discontinuity will arise at the interconnecting area between the side wall of the protective cover and the base wall of the holding body. This discontinuity, on the other hand, takes place exactly at an area particularly exposed to heat from cookers and therefore subjected to strong thermal stresses. Said structure discontinuity together with heat stresses sometimes causes micro-separations that are likely to trigger corrosion off, which phenomena, in the long run, may also involve greater damages to the pot bottom.

Even at best, the presence of an annular junction area between the capsule-like bottom and the base wall of the holding body is aesthetically rather unpleasant and in any case becomes a preferential area for deposit of hardly removable dirt.

It is also important to note that traditional pots are usually made of materials (e.g. stainless steel ) mainly directed to resist strong heat shocks, which materials however appear to be weakly resistant to the corrosion to which foods being cooked are submitted. On the other hand, the use of corrosion-resistant materials (alloyed steels) is not advisable because these materials are often inappropriate to withstand the thermal and mechanical stresses to which the outer portion of a pot is usually submitted.

From document EP 0222699 a saucepan is known according to the preamble of claim 1, presenting an inner container having a cilindrical side wall and a bottom wall closing one end of the side wall. An outer container, having a cilindrical side wall and a bottom too, contains and is joined to the inner container so as to define a tubular hollow space between the two bodies. The saucepan also has a heat diffusing layer interposed between and fixed to the bottom wall of the inner container and to the bottom wall of the outer container. The external side wall presents an annular recess in order to allow the connection with a thermal insulating plate to be placed under the saucepan.

The aim of the invention, referring particularly to pots having a capsule-like bottom, is to provide a pot which is of strong structure, great reliability, substantially resistant to external agent attacks and devoid of unattractive discontinuites at the junction area between the pot bottom and base wall.

The foregoing will become more apparent in the course of the present description and is substantially achieved by a saucepan or pot for cooking food as claimed in the appended claims.

Further features and advantages will best be understood from the detailed description of some preferred and non-exclusive embodiments of a pot for cooking food in accordance with the invention, taken hereinafter with reference to the accompanying drawings given by way of non-limiting examples, in which:
- Fig. 1 is a fragmentary sectional view of a pot for cooking food in accordance with the invention;

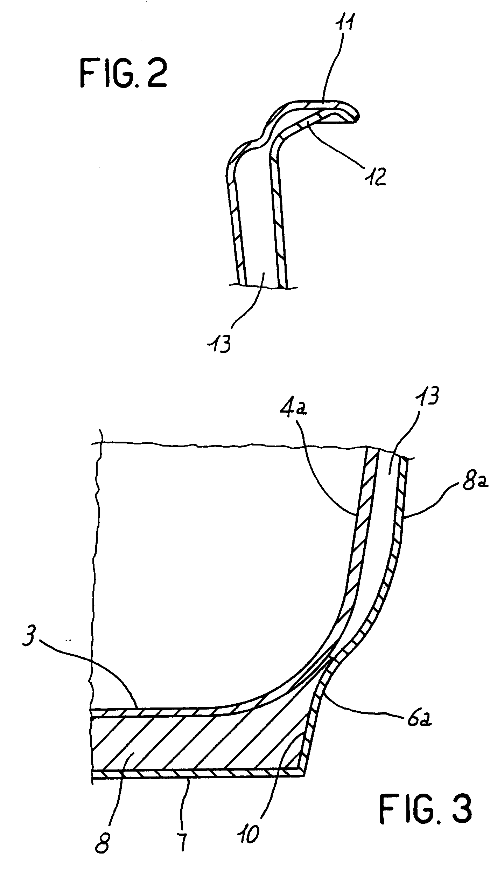

- Fig. 2 is an enlarged sectional view of a detail shown in Fig. 1 relating to an upper rim of the pot in question;
- Fig. 3 is an enlarged sectional view of another detail of Fig. 1 relating to a base area of the pot in question; and
- Fig. 4 is an elevational front view of an alternative embodiment of the pot in accordance with the invention.

With reference to the accompanying drawings, a saucepan or pot for cooking food in accordance with the present invention has been generally identified by reference numeral 1.

Pot 1 is comprised of a main holding body 2 of metal material , preferably stainless steel , having a base wall 3 and a side wall 4 emerging from a perimetric edge of said base wall to define a containing housing 5 in which food to be submitted to cooking is to be placed.

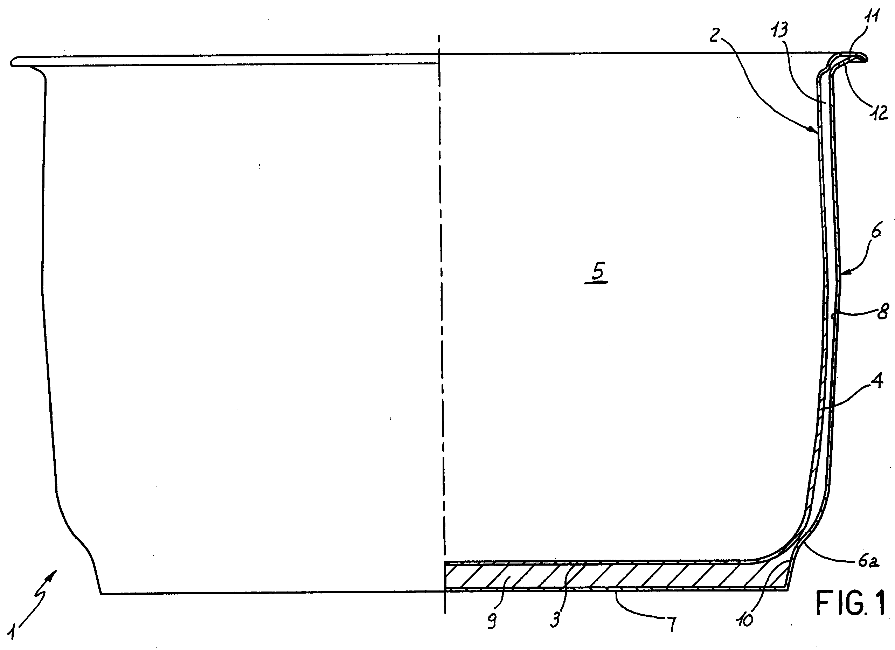

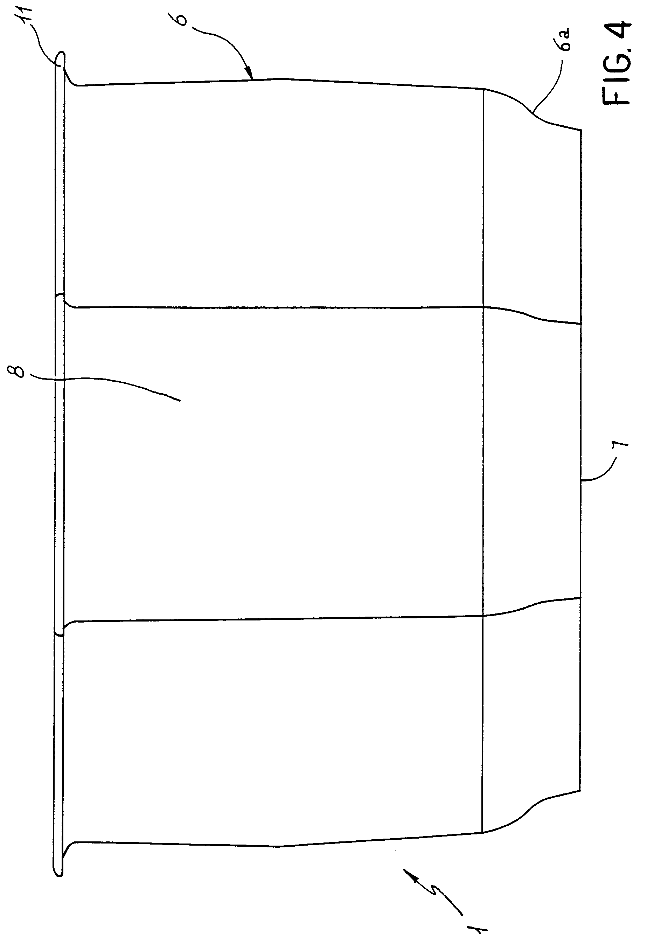

In an original manner, pot 1 further comprises an auxiliary holding body 6 which is also provided with a respective base wall 7 and a respective side wall 8 emerging from said base wall. The auxiliary body 6 the shape of which preferably matches that of the main body, is externally joined to said main body in a fixed manner. It is to note that from the point of view of their conformation, said bodies 2 and 6 can exhibit a circular (see Fig. 1) or polygonal (see Fig. 4) cross section.

Operatively interposed between the base wall 3 of the main body 2 and the base wall 7 of the auxiliary body 6, there is a heat-diffusing layer 9 of a material having a high heat conductivity.

In this case the heat-diffusing layer 9 is made of aluminium and is fixedly joined both to the base wall 3 and the base wall 7. From a production point of view, the heat-diffusing layer 9 is associated with the main body and the auxiliary body by a combined pressure-heat action. Practically, shaping of bodies 2 and 6 as well as of the heat-diffusing layer 9 takes place by a single hot forming operation, and the base walls 3 and 7 are fixedly joined to the respective opposite faces of the heat-diffusing layer 9.

As can be viewed from the accompanying figures, the auxiliary holding body 6 comprises an annular connecting band 6a between its base wall 7 and side wall 8, substantially extending at the heat-diffusing layer 9. The annular connecting band 6a too is fixedly connected to a corresponding outer perimetric band 10 of the heat-diffusing layer 9.

The above solution enables conveying of heat from the cookers to the heat-diffusing layer 9, and therefore to the main wall 3 of the main body 2, to be maximized.

It should be noted that the main body 2 and auxiliary body 6 are also fixedly interconnected at an upper rim 11, 12, by welding for example.

In accordance with another advantageous aspect of the invention, it is to point out that pot 1 also comprises a tubular insulating hollow space 13 operatively defined between the side wall 4 of the main holding body 2 and the side wall 8 of the auxiliary holding body 6.

Preferably, the tubular hollow space 13 is tightly sealed up and can contain air or, as an alternative solution, be substantially under vacuum or contain a very rarefied gas.

In the instance of the hollow space being substantially empty, on the one hand the insulating capability of the tubular hollow space is advantageously maximized and, on the other hand, the possibility that too high pressures may be generated in the gas possibly present in said hollow space, as the temperature rises, is inhibited.

Still referring to the accompanying drawings and in more detail, it is to note that the tubular hollow space 13 has a minimum radial bulkiness at the annular connecting band 9 and the upper rims 11 and 12 and a maximum radial bulkiness at the side walls 4 and 8 and, more specifically, at a lower area 4a, 8a of said side walls.

The invention achieves important advantages.

First of all, due to the provision of a double holding body or container, an improved heat insulation of the food being cooked is ensured. The above, together with the presence of a capsule-like bottom with a heat-diffusing layer made of aluminium practically enables a good heat transmission to the base wall 3 to be achieved together with a good capability to retain heat within the containing housing 5, by virtue of the double side wall 4, 8.

In particular, the hollow space 13 provides an insulation of the side wall 4 which is greatly efficient and leads to a sure improvement in the cooking uniformity of foods and in saving energy.

It is also to note that the particular conformation of the hollow space is advantageous.

Actually said hollow space has a minimum radial bulkiness at the area (annular connecting band 6a) where heat needs to be efficiently transferred and a maximum radial bulkiness at the area (side wall 4) where an efficient heat insulation is required.

It is also important to note that since connection between the main body and auxiliary body has been exclusively provided at the upper rims 11 and 12 and at the heat-diffusing layer 9, an excellent structural strength and reliability is ensured and in addition the pot of the invention can be produced at high production rates.

It should be also recognized that the pot in reference is also particularly appreciable from an aesthetic point of view since all discontinuities typical in particular of the traditional pots provided with a capsule-like bottom have been eliminated.

The absence of discontinuities also has a positive effect on the pot reliability because said pot does not possess areas where dirt is likely to be deposited or corrosion may start.

## Claims

1. A saucepan or pot for cooking food comprising:
- a main holding body (2) having a base wall (3) and a side wall (4) emerging from said base wall,
- an auxiliary holding body (6) which also has a respective base wall (7) and a respective side wall (8), said auxiliary body being externally and fixedly joined to said main body,
- a heat-diffusing layer (9) of a highly heat conductive material operatively interposed between the base wall (3) of said main body (2) and base wall (7) of said auxiliary body (6), and
- a tubular insulating hollow space (13) operatively defined between the side wall (4) of the main holding body (2) and the side wall (8) of the auxiliary holding body (6),
characterized by the fact that the auxiliary holding body (6) comprises an annular connecting band (6a) located between its base wall (7) and side wall (8), said annular connecting band being fixedly connected to a corresponding outer perimetric band (10) of a heat-diffusing layer (9), and by the fact that the tubular hollow space (13) has a minimun radial bulkiness close to the annular connecting band (6a) and a maximum radial bulkiness at a lower area (4a) and (8a) of the side walls (4) and (8).

2. A pot according to claim 1, characterized in that said heat-diffusing layer (9) is fixedly joined both to the base wall (3) of the main holding body (2) and the base wall (7) of the auxiliary holding body (6).

3. A pot according to claim 1, characterized in that said tubular hollow space (13) is tightly sealed up.

4. A pot according to claim 1 or 3, characterized in that said tubular hollow space (13) is substantially under vacuum.

5. A pot according to claim 1, characterized in that said main holding body (2) comprises an upper rim (11) coupled by welding to a corresponding upper rim (12) of the auxiliary holding body (6).

6. A pot according to claim 1, characterized in that said main holding body (2) is made of a first material and the auxiliary holding body is made of a second material differentiated from said first material.

## Patentansprüche

1. Kochgeschirr für Nahrungsmittel, umfassend:
- einen Hauptaufnahmekörper (2), der eine Basiswand (3) und eine von der Basiswand aufstehende Seitenwand (4) aufweist,
- einen Hilfsaufnahmekörper (6), der auch dieser eine jeweilige Basiswand (7) und eine jeweilige Seitenwand (8) aufweist, wobei der Hilfsaufnahmekörper außen am Hauptaufnahmekörper starr angreift,
- eine Wärmediffusionsschicht (9) aus einem Material hoher Wärmeleitfähigkeit, die wirksam zwischen der Basiswand (3) des Hauptaufnahmekörpers (2) und der Basiswand (7) des Hilfsaufnahmekörpers (6) liegt, und
- einen rohrförmigen Isolationszwischenraum (13), der wirksam zwischen der Seitenwand (4) des Hauptaufnahmekörpers (2) und der Seitenwand (8) des Hilfsaufnahmekörpers (6) festgelegt ist,
dadurch gekennzeichnet, daß der Hilfsaufnahmekörper (6) einen ringförmigen Übergangsstreifen (6a) umfaßt, der zwischen seiner Basiswand (7) und seiner Seitenwand (8) liegt, wobei der ringförmige Übergangsstreifen mit einem entsprechenden, äußeren Umfangsstreifen (10) der Wärmediffusionsschicht (9) verbunden ist, und dadurch, daß der rohrförmige Zwischenraum (13) einen minimalen, radialen Platzbedarf in der Nähe des ringförmigen Übergangsstreifens (6a) und einen maximalen, radialen Platzbedarf im Bereich einer unteren Fläche (4a) und (8a) der Seitenwände (4) und (8) aufweist.

2. Kochgeschirr nach Anspruch 1, dadurch gekennzeichnet, daß die Wärmediffusionsschicht (9) sowohl an der Basiswand (3) des Hauptaufnahmekörpers (2) als auch an der Basiswand (7) des Hilfsaufnahmekörpers (6) starr angreift.

3. Kochgeschirr nach Anspruch 1, dadurch gekennzeichnet, daß der rohrförmige Zwischenraum (13) hermetisch abgedichtet ausgeführt ist.

4. Kochgeschirr nach Anspruch 1 oder 2, dadurch gekennzeichnet, daß der rohrförmige Zwischenraum (13) sich im wesentlichen unter Vakuum befindet.

5. Kochgeschirr nach Anspruch 1, dadurch gekennzeichnet, daß der Hauptaufnahmekörper (2) einen oberen Rand (11) umfaßt, der über eine Verschweißung an einem entsprechenden, oberen Rand (12) des Hilfsaufnahmekörpers (6) angreift.

6. Kochgeschirr nach Anspruch 1, dadurch gekennzeichnet, daß der Hauptaufnahmekörper (2) aus einem ersten Werkstoff besteht und der Hilfsaufnahmekörper aus einem zweiten vom ersten Werkstoff verschiedenen Werkstoff besteht.

## Revendications

1. Récipient de cuisson pour nourriture, comprenant:
- un corps conteneur principal (2) ayant une paroi de base (3) et une paroi latérale (4) s'étendant de ladite paroi de base,
- un corps conteneur auxiliaire (6) qui a lui-aussi une paroi de base respective (7) et une paroi latérale respective (8), ledit corps auxiliaire étant uni à l'extérieur et de manière fixe audit corps principal,
- une couche de diffusion de la chaleur (9) réalisée en un matériau de conductibilité thermique élevée, interposée de manière opérationnelle entre la paroi de base (3) dudit corps principal (2) et la paroi de base (7) dudit corps auxiliaire (6), et
- un espace tubulaire d'isolation (13) défini de manière opérationnelle entre la paroi latérale (4) du corps conteneur principal (2) et la paroi latérale (8) du corps conteneur auxiliaire (6),
caractérisé en ce que ledit corps conteneur auxiliaire (6) comporte une bande annulaire de raccordement (6a) située entre sa paroi de base (7) et sa paroi latérale (8), ladite bande annulaire de raccordement étant reliée de manière fixe à une bande périmétrale correspondante (10) d'une couche de diffusion de la chaleur (9), et en ce que l'espace tubulaire (13) a un encombrement radial minimum à proximité de la bande annulaire de raccordement (6a) et un encombrement radial maximum en correspondance d'une zone inférieure (4a) et (8a) des parois latérales (4) et (8).

2. Récipient selon la revendication 1, caractérisé en ce que ladite couche de diffusion de la chaleur (9) est unie de manière fixe soit à la paroi de base (3) du corps conteneur principal (2) soit à la paroi de base (7) du corps conteneur auxiliaire (6).

3. Récipient selon la revendication 1, caractérisé en ce que ledit espace tubulaire (13) est fermé de manière étanche.

4. Récipient selon la revendication 1 ou 3, caractérisé en ce que ledit espace tubulaire (13) est essentiellement sous vide.

5. Récipient selon la revendication 1, caractérisé en ce que ledit corps conteneur principal (2) comporte un bord supérieur (11) couplé par soudage à un bord supérieur correspondant (12) du corps conteneur auxiliaire (6).

6. Récipient selon la revendication 1, caractérisé en ce que ledit corps conteneur principal (2) est fabriqué en un premier matériau et le corps conteneur auxiliaire est fabriqué en un second matériau différentié dudit premier matériau.
